# EUROPEAN PATENT APPLICATION

(11) **EP 4 092 602 A1**
(43) Date of publication of application: **23.11.2022**
(21) Application number: 21200803.1
(22) Date of filing: 04.10.2021
(51) Int. Cl.: G06Q 30/06

(54) **A METHOD OF CONTROLLING AND SELECTING ITEMS FOR JEWELRY SHOPS ACCORDING TO THE PREFERENCES OF A USER**

(30) Priority: 17.05.2021 IT 202100012596
(71) Applicant: Gioielleria Italiana Società a Responsabilità Limitata, 17012 Albissola Marina SV (IT)
(72) Inventor: Mangini, Francesco, 17012 Albissola Marina SV (IT)
(74) Representative: Perani & Partners S.p.A.

(57) **Abstract**

A method (1) of controlling and selecting items for jewelry shops according to the preferences of a user, the method (1) comprising the steps of a) providing a list of items available for selection and customization by a user; b) providing a list of item suppliers; c) providing a management algorithm residing in a central processing unit configured to distribute the manufacture of an item, according to the item and its customization, to one or more suppliers of the list of suppliers; d) selecting and customizing an item from the list of items via a user interface in communication with the central processing unit; the step d) comprises the steps of d1) estimating the price of the selected item in real time in a relevant currency according to the gold price and the currency exchange rate at which the price has been estimated and a reference currency; d2) notifying the estimated price to the user via the user interface; d3) confirming the price and the selected item at a time point by the user via the user interface; d4) establishing a reference gold price and a reference exchange rate between the currency exchange rate at which the price has been estimated and a and a reference currency exchange rate at the time point when the purchase order was confirmed

## Description

### Technical field

The present invention relates to a method of controlling and selecting items for jewelry shops according to the preferences of a user: Preferably, the method finds application in points-of-sale for jewelry items such as, for example, jewelry shops and is usefully employed in e-commerce and marketplace contexts.

### Background art

Jewelers are known in the art to order one or more custom or standard jewelry items from an online platform or a printed catalog of a supplier. Specifically, an agreement is made between a jewelry shop and a supplier, based on which the jeweler can order a standard or custom jewelry item from the given supplier. Once the item has been selected, the jeweler orders the item from the supplier, who manufactures it and delivers it to the jeweler. During the purchase process, the jeweler pays the supplier according to the prices established by the agreement between the jeweler and the supplier.

### Problems of the prior art

Prior art methods of ordering a jewelry item suffer from a number of drawbacks associated with the prices of the materials that form the items. Such prices established by an agreement existing between the supplier and the jeweler cannot account for changes in the prices of materials over time and the currency exchange rate with which certain materials such as precious stones are paid.

### Object of the invention

The object of the present invention is to provide a method of controlling and selecting items for jewelry shops according to the preferences of a user that can obviate the above discussed prior art drawbacks.

In particular, an object of the present invention is to provide a method of controlling and selecting items for jewelry shops that can account for fluctuations in prices and currencies in the purchase of the relevant items.

The aforementioned technical purpose and objects are substantially fulfilled by a method of controlling and selecting items for jewelry shops according to the preferences of a user which comprises the technical features as disclosed in one or more of the accompanying claims.

### Benefits of the invention

Advantageously, the method of the present invention can account for real-time fluctuations in prices and currency to optimize assessment of the final price of the jewelry item.

### BRIEF DESCRIPTION OF FIGURES

Further features and advantages of the present invention will result more clearly from the illustrative, non-limiting description of a preferred, non-exclusive embodiment of a method of controlling and selecting items for jewelry shops according to the preferences of a user as shown in the accompanying drawings:

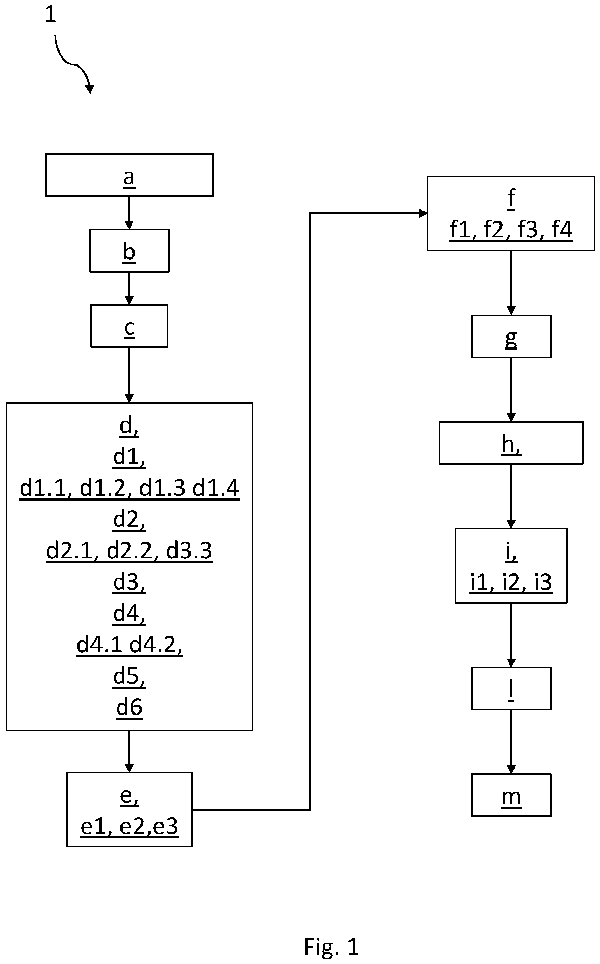

- Figure 1 shows a block diagram of the method of controlling and selecting items for jewelry shops according to the preferences of a user according to one embodiment of the present invention.

### DETAILED DESCRIPTION

Even when not expressly stated, the individual features as described with reference to the particular embodiments shall be intended as auxiliary to and/or interchangeable with other features described with reference to other exemplary embodiments.

The present invention relates to a method of controlling and selecting items for jewelry shops according to the preferences of a user, preferably according to the preferences of a jeweler. The method is generally designated by numeral 1 in Figure 1.

The method finds application in any type of jewelry shop and in the control and selection of any item for jewelry shops.

The method 1 of the present invention is configured to account for fluctuations in gold prices and currency exchange rates (between a relevant currency and a reference currency) and preferably also for fluctuations in other materials, in the selection and purchase of one or more items. Furthermore, the present invention can coordinate the manufacture of one or more items by distributing it over several suppliers according to the preferences expressed by the users, thereby controlling and optimizing manufacture and also tracking and fixing the prices of the materials and the currency exchange rates.

The method 1 of the present invention comprises a series of steps as described below and schematically shown in the block diagram of Figure 1.

The method comprises a step of a) providing a list of items available for selection and customization by a user. The list of items can be loaded onto a central processing unit, preferably a database associated therewith, to be managed by means of a management algorithm as explained below. This list of items is constantly updated according to user preferences. It should be noted that, as used herein, users may refer to jewelers that want to place an order to purchase one or more items intended for jewelry.

According to a preferred embodiment, the step a) includes providing a list of items that may include jewelry items, goldsmith's items, silversmith's items, costume jewelry items , watchmaking items, packaging, display stands and warranties. It should be noted that each item can be customized at different levels, such as the type of item (rings, pendants, necklaces, earrings, bracelets, anklets, cufflinks, brooches, automatic watches, time-only watches, chronographs, diver watches, tool watches, display stands for rings, display stands for bracelets, display stands for parures, display stands for earrings, display stands for jewelry sets, full line display stands, cardboard boxes, wooden boxes, jewelry rolls, collection boxes, chests) and/or the material (gold, silver, platinum, etc.) and/or mounted stones (solitaire, eternity ring, trilogy ring, ring with central stone and contour, wedding band, , 5-stone band, 7-stone band, tennis bracelets, bracelets with pendants, bracelets for parures, bracelets with initials, single stone earrings, pendant earrings, lobe earrings, earrings with central stone and contour) and/or types of stones (color and purity of diamonds, type and quality of precious stones) and/or color (gold, silver, etc.) and/or engravings and/or dimensions (the carat weight of the stones to be set in the jewel, the size in cm of the bracelets, the size of the ring, the type and weight of the chain for necklaces, the type and weight of the butterfly for earrings).

In other words, each item in the list of items can be configured/customized as appropriate for the item itself.

Preferably, specific characteristics such as material, weight, stone type, etc. are associated with each item and level of customization during the supply of the list of items.

The method 1 comprises a step of b) providing a list of item suppliers. Once again, the list of item suppliers is provided to the central processing unit, preferably stored in the database. Specifically, the step b) includes registration by suppliers via a supplier interface, for example comprising a web platform or application that can be accessed from a fixed device (computer) or a mobile device (a smartphone or a tablet) by the supplier. It should be noted that the step of registration by the supplier can also take place by means of Smart Contracts as is known in the art. As the registration is executed the list of suppliers that can be used for the later steps of the method can be generated. This list may be constantly updated with additional registrations by other suppliers.

Preferably, each supplier has a certain qualification associated therewith, indicating his/her ability to carry out certain production processes, to manufacture or produce certain product parts of an item and to supply a certain part. For example, the list of suppliers may contain suppliers of gold parts, precious stones or suppliers that can assemble certain components or carry out machining thereupon.

More preferably, each supplier can also be assigned a feedback value associated with the previously executed orders, which accounts, for example, for the quality of the manufactured part, the time for manufacture and shipment. This feedback value can be assigned both by the end user and by operators associated with the central processing unit.

Preferably, the step b) also includes providing a list of assembly centers specialized in assembling certain items once the product parts manufactured by the suppliers have been received. As for suppliers, the list of assembly centers is provided to the central processing unit, preferably to the database, and may be constantly updated.

The method 1 comprises a step of c) providing a management algorithm residing in a central processing unit configured to distribute the manufacture of an item, according to the item and its customization, to one or more suppliers of the list of suppliers and for assessment of the price of the item according to the currency exchange rate and the price of the materials, as explained below. Specifically, the central processing unit located at an operating site is configured to run the management algorithm. In detail, the central processing unit comprises a database that stores the lists of items and the lists of suppliers, that can be accessed by the management algorithm to perform the subsequent steps, and preferably the list of assembly centers.

Preferably, the management algorithm is a neural network-based algorithm trained to divide items based on the items themselves and their customization, select suppliers from the list of suppliers according to the product parts and the production processes, define a production line and coordinate the production of the selected item. Preferably, the algorithm is also configured to select the assembly centers based on the items to be manufactured.

Moreover, according to the preferred embodiment, the management algorithm is configured to assess the price of the items in real time, while accounting for the price of the materials and the currency exchange rate.

The method steps will be described below for simplicity with reference to the case in which a single item has been selected and customized in the step d). It should be noted that the steps are also applicable when several items are selected and customized by a plurality of users.

The method 1 comprises a step of d) selecting and customizing an item from the list of items via a user interface in communication with the central processing unit. Specifically, the user interface comprises a web page or an application that can be accessed from a fixed device (computer) or a mobile device (smartphone or tablet) in signal communication with the central processing unit. Again, access to the user interface is allowed upon registration by the user.

The user, here the jeweler, can select one or more items of interest from the user interface and customize them, as appropriate for the item itself.

Preferably, upon selection and customization of one or more items, step d) includes confirming the purchase order. It should be noted that, , based on the user order, the management algorithm indicates the timing and final cost of the order, via the user interface.

Specifically, the step d) includes the step of d1) estimating the price of the selected item in real time in a relevant currency according to the gold price and the exchange rate between the relevant currency and a reference currency.

Preferably, the step d1) comprises the substep of d1.1) establishing a signal communication between the central processing unit and one or more stock exchange processing units associated at least with the price of gold and the rate of exchange between currencies. It should be noted that the stock exchange processing units are, for example, associated with the world's leading stock exchanges and allow constant tracking of the price of gold and/or other materials as well as the currency exchange rates. The step d1) comprises a substep of d1.2) selecting the relevant currency and reference currency according to the user. Specifically, the reference currency is the US Dollar because precious stones are usually purchased in dollars, although this does not prevent the use of a different reference currency. Concerning the relevant currency, the user can select any relevant currency including the dollar depending on the geographic location in which he/she is and the purchase is to be made. For example, the relevant currency may be the Euro and the reference currency may be the US Dollar. Once currencies have been selected, the step d1) comprises the substep of d1.3) acquiring the gold price and the exchange rate between the relevant currency and the reference currency in real time. In particular, the management algorithm considers the price of gold listing the rate of exchange between the relevant currency and the reference currency over time, preferably from a time point when the user begins the step of selecting the item to completion thereof following customization. Thus, for example depending on the material and weight of the selected and customized item, the price may be assessed based on the price of gold. It should be noted that this operation may be carried out for any material whose price is assessed in real time (such as platinum, silver, copper, etc.). On the other hand, the currency exchange rate allows, for example, the cost of the diamonds selected for the customized item that the user must pay to be estimated based on the purchase power of the relevant currency with respect to the reference currency. Finally, the step d1) comprises the substep of d1.4) defining the price of the selected item according to the gold price and the exchange rate between the relevant currency and the reference currency by means of the management algorithm. Specifically, once the item has been selected and customized, the management algorithm can identify, based on the list of items and the level of customization, the material/s, weight and presence of precious stones and based on the price of gold and/or other materials and the exchange of currency. This price setting operation shall be carried out by multiplying and/or converting the weight, the gold/material price and the price of an item in the reference currency and the relevant currency.

The step d) comprises a step of d2) notifying the estimated price to the user via the user interface. Specifically, once the item has been selected and customized and given the price of gold and the currency exchange rate, the method includes displaying to the user the final price of the item on the user interface.

According to a preferred embodiment, the step d2) comprises the substep of d2.1) generating a price estimation signal according to the estimation performed in step d1). Specifically, the estimation signal includes the price of the selected item. It should be noted that the price of the selected item included in the estimation signal may change over time until the purchase of the item is confirmed, as explained below. Then, the step d2) comprises the substep of d2) sending the estimation signal to the user interface. Finally, the step d2) comprises the substep of d2.3) displaying the price of the selected item in a relevant currency on the user interface according to the price estimation signal. Thus, the method can keep the user constantly updated on the price of the selected item.

Step d) comprises a step of d3) confirming the price and the selected item at a time point by the user via the user interface. Specifically, the step d3) includes confirming the purchase and therefore setting the time point to be considered for the price of gold and the currency exchange rate as well as for the price of the item itself.

Preferably, the step d3) includes generating an acknowledgement signal via the user interface, representing the acceptance of the selected item and its estimated price at the time point when the acknowledgement signal is generated. In other words, the user sends an acknowledgement signal to the central processing unit which accounts for the user's intention to purchase the selected and customized item at the displayed based on the price of gold and the currency exchange rate.

The step d) comprises a step of d4) establishing a reference gold price and a reference exchange rate between the relevant currency and a reference currency at the time point when the purchase order was confirmed. Specifically, the step d4) includes saving the price of gold and the currency exchange rate at the confirmation time, to keep it on the entire production chain of the selected and customized item. It should be noted that the step d4) also includes setting the price of any material whose price is present in the world stock exchanges.

Preferably, the step d) comprises the substep of d4.1) storing the gold price and the rate of exchange between the relevant currency and the reference currency in the central processing unit at the time point when the purchase order was confirmed; Then, the step d4) comprises the substep of d4.2) defining the reference gold price and the reference exchange rate according to the stored gold price and rate of exchange between the relevant currency and the reference currency.

According to a preferred embodiment, the step d) comprises the step of d5) making the payment for the selected item at the estimated price via the user interface preferably, by credit card, wire transfer or loan payments. Finally, the step d) comprises a step of d6) generating a payment-complete signal to be sent to the central processing unit to start the subsequent steps for production and manufacture of the one or more items.

According to a preferred embodiment, the method 1 comprises the step of e) dividing the selected and customized item by the management algorithm into one or more product parts and/or one or more production processes. It should be noted that for the purposes of the present invention, the term "product part" may refer to a raw material such as, for example, gold or silver to be worked (and/or precious stones) and semi-finished products such as, for example, metal filaments to be bent.

It should be noted that the step e) may be carried out in parallel with the step d) so that during selection the management algorithm will divide the selected item into product parts and/or one or more production processes. Thus, during the division into product parts, the step d) may associate a price with each of them based on the price of gold (and/or other materials) and the currency exchange rate as discussed above. Then, the management algorithm sums up the prices of each single product and notifies the sum in real time to the user before the user makes the purchase and sends the acknowledgement signal.

Preferably, the step e) comprises the step of e1) identifying in the selected item one or more product parts that can be constructed separately, whose assembly comprises the selected item. Specifically, the management algorithm performs the selection and customization steps, finds and identifies all possible product parts of the item in question that can be manufactured and/or assembled separately.

This identification of the product parts is performed by accessing the database associated with the central processing unit in which the characteristics of the items have been provided. Preferably, the neural network-based management algorithm recognizes all possible product parts of the selected item.

The step e) comprises the step of e2) identifying in the selected item one or more production processes, according to customization, that are required to construct the identified product parts and/or to at least partially assemble them. Specifically, the management algorithm identifies the production processes to be performed on one or more identified product parts, for example, of the working or partial assembly steps. This identification of the production processes is performed by accessing the database associated with the central processing unit in which the characteristics of the products have been provided like for the step e1). Preferably, the neural network-based management algorithm recognizes all possible production processes associated with the selected item also based on the division into product parts.

Preferably, the step e3) comprises a step of associating each identified product part with a corresponding cost based on the reference price of gold (and/or other materials) and the reference exchange rate that have been set, to notify it to the corresponding suppliers. Specifically, the price of each identified product part depends on the gold or material price and the reference exchange rate established for each supplier that will be selected.

According to a preferred embodiment, the method 1 comprises the step of f) defining, for the selected item, a production line, based on the product parts and the production processes and the suppliers of the list of suppliers and preferably based on the assembly centers. Specifically, the production line defines an order for production/manufacture of the product parts/production processes to be performed to produce and assemble the selected and customized item. In detail, the step f) includes distributing the production/manufacture of the product parts/production processes over one or more suppliers to produce/manufacture product parts/ production processes in parallel over multiple suppliers and/or in series if certain product parts/production processes must or can be manufactured at later times requiring product parts/production processes previously concluded or extended timelines.

In other words, the step f) includes organizing and coordinating the suppliers and production processes, according to the item distribution.

Advantageously, the method 1 allows the suppliers to work under the coordination of the system that indicates them the product parts to be produced, to whom they are to be sent and from whom they are to be received and which production processes are to be carried out.

According to a preferred embodiment, the step f) comprises the step of f1) identifying one or more suppliers from the list of suppliers to be commissioned for the production of one or more product parts and/or the implementation of one or more production processes; The identification phase may be based not only on the information about the relevant suppliers provided at the time of registration and contained in the database, but also on the feedback value associated with each supplier. Specifically, the management algorithm, preferably based on neural networks, accounts for the available supplier information and for the distribution to identify the suppliers to be commissioned for the production of one or more product parts and/or for the implementation of one or more production processes. It should be noted that the management algorithm, preferably based on neural networks, can identify two or more suppliers that can be commissioned for the production of one or more product parts and/or for the implementation of one or more production processes if one or more of them should refuse the commitment.

Preferably, the step f) comprises a step of f2) identifying a production order for the product parts and the production processes, according to the identified suppliers, the product parts and the production processes. Specifically, the step f2), as stated above, includes defining an order in which the product parts must be produced and the production processes must be carried out. In detail, the definition of the production order accounts for and defines an average completion time for the production of a product part and the implementation of the production process for each supplier. Furthermore, the definition of the production order also accounts for and defines the delivery time required to transport a product part from one supplier to another and preferably also to an assembly center.

Finally, the step f) comprises a step of f3) defining guidelines to be followed for each identified supplier commissioned for the production of one of the product parts and/or the implementation of one or more production processes. The guidelines refer to the steps that each supplier must follow for production of the relevant product part and are preferably indicated and defined by the management algorithm, for example, by the relevant artificial intelligence.

Preferably, the step f) comprises the step of f4) defining price lines to be followed for each identified supplier commissioned for the production of one of the product parts and/or the implementation of one or more production processes according to the gold price and the exchange rate that have been established. In particular, the step f4) includes informing the suppliers about the gold and material prices and the reference exchange rate to establish a price for the product parts.

According to a preferred embodiment, the method comprises the step of g) selecting one or more suppliers from the list of suppliers according to the defined production line. Specifically, once the production line for the selected and customized item has been defined, the management algorithm selects the suppliers that are to be commissioned for the production of one or more product parts and/or the implementation of one or more production processes as well as a work order.

The method comprises the step of h) of sending a work order signal to each selected supplier, representing the product part to be constructed and/or the production process to be carried out according to the production line and/or the reference gold price and the reference exchange rate. Specifically, the step h) includes sending the work order signal to the supplier interface in signal communication with the central processing unit so that each supplier can review in detail the product part to be constructed and/or the production process to be carried out on a product part or estimate the cost of the product part according to the gold price and the exchange rate that have been established, preferably the reference gold price and exchange rate. Preferably, the step h) comprises a step of accepting or rejecting the work order. In the former case, the supplier interface sends an acceptance acknowledgement signal to the central processing unit to start the production of the item. In the latter case, the supplier interface sends a rejection signal to the central processing unit, which, by means of the management algorithm, defines a new production line, selects a new supplier instead of the rejecting supplier and sends the corresponding work order signal. If needed, the management algorithm sends further work order signals to additional suppliers according to the new production line, and cancels the previous work order signals.

It should be noted that the work order signal comprises information about the product part to be produced and the production process to be implemented as well as any indications about whom to receive a product part from or whom to send it to once a production process has been completed. Also, the work order signal also comprises the average completion times within which the corresponding supplier must manufacture the part and/or implement the production process as well as the times required for delivery.

According to a preferred embodiment, for example, the suppliers of gold components will find in their work order the weight of the gold of each item, the expected working loss and a maximum tolerance margin from the predetermined weight. On the other hand, the suppliers of precious stones will find in their work order characteristics of each precious stone such as carat weight or size, or color and purity for diamonds, the value in Euro, the day by which the delivery has to take place and the destination.

According to a preferred embodiment, the step h) includes using blockchain algorithms to send the work order signal to the relevant suppliers, by preferably establishing a "smart contract" with the relevant supplier.

The method comprises the step of i) constructing the product parts and implementing the production processes according to the defined production line. According to the work order signal, each selected supplier manufactures the product part, implements the production process, sends the product part and/or receives a product part.

According to a preferred embodiment, the step i) comprises the step of i1) producing and/or supplying the product part and/or implementing the production process. Specifically, the step i1) can include processing a raw material, for example, gold or silver received from another supplier and/or processing a semi-finished product to produce the relevant product part. Moreover, the step i1) can also include implementing the production process on the raw material, on the semi-finished product or in general on the received product part to provide the product part on which the production process has been implemented. Next, the step i) comprises a step of i2) sending the product part to an assembly center. Alternatively, the step i) comprises the step of i3) sending the product part to a supplier of the list of suppliers before the assembly center to implement a production process and/or to assemble it at least partially with one or more product parts produced and/or supplied by the relevant supplier and/or other suppliers and sent to the relevant supplier. Specifically, the step i3) includes sending a product part to another supplier for further processing.

It should be noted that the work order signal also includes the target supplier or the assembly center to which the product part is to be sent, as well as the source supplier from which the product part is to be received. Preferably, the order signal also comprises the delivery times required for delivery between one supplier and another and between the supplier and the assembly center.

It should be noted that the steps i1), i2) and i3) may be carried out by each supplier to whom the work order signal has been sent.

Preferably, the step i) includes sending the supplier interface a pre-filled transport document to be associated with the delivery of the product part to another supplier or to the assembly center.

The method 1 comprises the step 1) of assembling the product parts to produce the selected item in an assembly center. In particular, the product parts produced by the suppliers are sent to a corresponding assembly center where the final assembly takes place. Preferably, the management algorithm selects the assembly center suitable for the item and sends the address associated with the selected assembly center to the respective selected suppliers.

According to a preferred embodiment, the method comprises a step of m) sending the assembled item to the user who selected the item. Specifically, the step m) also includes sending the user an estimate of the final delivery time via the user interface based on the production line defined for the item.

The present invention also relates to a jewelry item production system configured to perform the method as described above. The system comprises a management algorithm. The latter is configured to coordinate the method steps from d) to m) to estimate the price of the items in real time according to the price of gold (and/or other materials) and the currency exchange rate. In addition, the algorithm is configured to split the selected items, define the production line, select the suppliers and coordinate them with the work order signal, as well as manage the assembly and delivery stages.

The system includes a central processing unit configured to run the management algorithm. Preferably, the central processing unit has a database associated therewith, which stores the lists of items and suppliers. More preferably, lists of assembly centers are also stored in the database.

The system comprises stock exchange processing units, comprising for example rating units configured to monitor in real time the price of real-time materials (raw materials) and the currency exchange rate in world stock exchanges.

Preferably, the central processing unit is in signal communication with the stock exchange processing units and is configured to acquire the prices of the materials and of the currency exchange rate in real time to display the price of selected and personalized items to the user.

The system also includes user interfaces, in signal communication with the central processing unit and configured to select and customize one or more items and to display the price of the selected items. The user interfaces are preferably associated with a fixed or mobile device and are designed as web pages and/or applications. It should be noted that the user interface includes a virtual showcase, as is typically found in e-commerce and marketplace contexts. Each user can access the user interface upon registration.

The system also includes one or more suppliers configured to produce a product part and/or implement a production process. Preferably, the suppliers are also configured to send the product parts they manufacture to another supplier and/or to an assembly center. According to a preferred embodiment, each supplier is associated with a supplier interface in signal communication with the central processing unit and configured to receive the work order signal and generate and send the progress signal.

The system includes one or more assembly centers configured to receive the manufactured product parts and assemble the selected items. Preferably, the assembly centers are also configured to send the assembled items to their users.

According to a preferred embodiment, the system comprises one or more quality control centers configured to perform quality control on the assembled item before it is sent to the relevant user

## Claims

1. A method (1) of controlling and selecting items for jewelry shops, according to the purchase preferences of a user, the method (1) comprising the steps of:
a) providing a list of items available for selection and customization by a user;
b) providing a list of item suppliers;
c) providing a management algorithm residing in a central processing unit configured to distribute the construction of an item, according to the item and its customization, to one or more suppliers of the list of suppliers;
d) selecting and customizing an item from the list of items via a user interface in communication with the central processing unit
**characterized in that** the step d) comprises the steps of
d1) estimating the price of the selected item in real time in a relevant currency according to the gold price and the exchange rate between the relevant currency and a reference currency;
d2) notifying the estimated price to the user via the user interface;
d3) confirming the price and the selected item at a time point by the user via the user interface;
d4) establishing a reference gold price and a reference exchange rate between the relevant currency and a reference currency at the time point when the purchase order was confirmed.

2. The method (1) as claimed in claim 1, wherein the step d1) comprises the substeps of:
d1.1) establishing a signal communication between the central processing unit and one or more stock exchange processing units associated at least with the price of gold and the rate of exchange between currencies;
d1.2) selecting the relevant currency and reference currency according to the user;
d1.3) acquiring the gold price and the exchange rate between the relevant currency and the reference currency in real time;
d1.4) defining the price of the selected item according to the gold price and the exchange rate between the relevant currency and the reference currency by means of the management algorithm.

3. The method (1) as claimed in claim 1 or 2, wherein the step d2) comprises the substeps of:
d2.1) generating a price estimation signal according to the estimation performed in step d1);
d2.2) sending the estimation signal to the user interface;
d2.3) displaying the price of the selected item in a relevant currency on the user interface according to the price estimation signal.

4. The method (1) as claimed in any of claims 1 to 3, wherein the step d3) includes generating an acknowledgement signal via the user interface, representing the acceptance of the selected item and its estimated price at the time point when the acknowledgement signal is generated.

5. The method (1) as claimed in any of claims 1 to 4 wherein the step d4) comprises the substeps of:
d4.1) storing the gold price and the exchange rate between the relevant currency and the reference currency in the central processing unit at the time point when the purchase order was confirmed;
d4.2) defining the reference gold price and the reference exchange rate according to the stored gold price and exchange rate between the relevant currency and the reference currency.

6. The method (1) as claimed in any of claims 1 to 5 wherein the step d) comprises the steps of:
d5) paying for the selected item at the estimated price via the user interface;
d6) generating a payment-complete signal to be sent to the central processing unit.

7. The method (1) as claimed in any of claims 1 to 6 wherein the method comprises the steps of:
e) dividing the selected and customized item by the management algorithm into one or more product parts and/or one or more production processes;
f) defining a production line for the selected item according to the product parts, the production processes and the suppliers of the list of suppliers;
g) selecting one or more suppliers from the list of suppliers according to the defined manufacturing line;
h) sending a work order signal to each selected supplier, representing the product part to be constructed and/or the production process to be carried out according to the production line and/or the reference gold price and the reference exchange rate;
i) constructing the product parts and carrying out the production processes according to the defined production line;
l) assembling the product parts to produce the selected item in an assembly center;
m) shipping the assembled item to the user who selected the item.

8. The method (1) as claimed in claim 7, wherein the step e) comprises the steps of:
e1) identifying in the selected item one or more product parts that can be constructed separately, whose assembly comprises the selected item;
e2) identifying in the selected item one or more production processes, according to customization, that are required to construct the identified product parts and/or to at least partially assemble them;
e3) associating each identified product part with a corresponding cost according to the gold price and the exchange rate that have been established.

9. The method (1) as claimed in claim 7 or 8, wherein said step f) comprises the steps of:
f1) identifying one or more suppliers from the list of suppliers to be commissioned for the production of one or more product parts and/or the implementation of one or more production processes;
f2) identifying a production order for the product parts and the production processes, according to the identified suppliers, the product parts and the production processes;
f3) defining guidelines to be followed for each identified supplier commissioned for the production of one of the product parts and/or the implementation of one or more production processes;
f4) defining price lines to be followed for each identified supplier commissioned for the production of one of the product parts and/or the implementation of one or more production processes according to the gold price and the exchange rate that have been established.

10. The method (1) as claimed in any of claims 7 to 9, wherein the step h) includes sending the work order signal to a supplier interface in signal communication with the central processing unit so that each supplier can review in detail the product part to be constructed and/or the production process to be carried out on a product part and/or estimate the cost of the product part according to the gold price and the exchange rate that have been established.
